(19) **Europäisches Patentamt**
**European Patent Office**
**Office européen des brevets**

(11) **EP 1 274 179 B1**

(12) **EUROPEAN PATENT SPECIFICATION**

(45) Date of publication and mention
of the grant of the patent:
**23.05.2007 Bulletin 2007/21**

(51) Int Cl.:
*H04B 7/02* (2006.01)    *H04J 13/00* (2006.01)

(86) International application number:
**PCT/CN2001/000134**

(21) Application number: **01913466.7**

(22) Date of filing: **20.02.2001**

(87) International publication number:
**WO 2001/078253 (18.10.2001 Gazette 2001/42)**

(54) **METHOD FOR SIGNAL PROCESSING USED IN TERMINAL DEVICE OF CODE DIVISION MULTIPLE ACCESS MOBILE COMMUNICATION SYSTEM**

VERFAHREN ZUR SIGNALVERARBEITUNG IN EINEM ENDGE-RÄT EINES CDMA-MOBILKOMMUNIKATIONSSYSTEMS

PROCEDE DE TRAITEMENT DE SIGNAUX UTILISE AVEC UN TERMINAL DANS UN SYSTEME DE COMMUNICATION MOBILE AMRC

(84) Designated Contracting States:
**AT BE CH CY DE DK ES FI FR GB GR IE IT LI LU MC NL PT SE TR**

(30) Priority: **11.04.2000 CN 00105846**

(43) Date of publication of application:
**08.01.2003 Bulletin 2003/02**

(73) Proprietor: **China Academy of Telecommunications Technology, MII**
**Haidian District,**
**Beijing 100083 (CN)**

(72) Inventors:
 • **LI, Feng**
  **Beijing 100083 (CN)**
 • **HE, Yusong**
  **Beijing 100083 (CN)**
 • **XU, Tiezhu**
  **Beijing 100083 (CN)**

(74) Representative: **Mounteney, Simon James et al**
**Marks & Clerk**
**90 Long Acre**
**London WC2E 9RA (GB)**

(56) References cited:
WO-A-00/64116        WO-A-99/08401
WO-A-99/40698        WO-A-99/59351
WO-A-99/60759        CN-A- 1 251 705

• **WEIDONG YANG ET AL: "A novel fast joint detector for smart antenna based CDMA systems" SIGNALS, SYSTEMS, AND COMPUTERS, 1999. CONFERENCE RECORD OF THE THIRTY-THIRD ASILOMAR CONFERENCE ON OCT. 24-27, 1999, PISCATAWAY, NJ, USA, IEEE, US, 24 October 1999 (1999-10-24), pages 159-163, XP010373965 ISBN: 0-7803-5700-0**
• **KLEIN A ET AL: "Known and novel diversity approaches in a JD-CDMA system concept developed within COST 231" PERSONAL, INDOOR AND MOBILE RADIO COMMUNICATIONS, 1995. PIMRC'95. WIRELESS: MERGING ONTO THE INFORMATION SUPERHIGHWAY., SIXTH IEEE INTERNATIONAL SYMPOSIUM ON TORONTO, ONT., CANADA 27-29 SEPT. 1995, NEW YORK, NY, USA,IEEE, US, 27 September 1995 (1995-09-27), pages 512-516, XP010150939 ISBN: 0-7803-3002-1**
• **ALKUSSAYER H M ET AL: "Time diversity decorrelator (TDD); a near-far resistant detector for asynchronous CDMA system" VEHICULAR TECHNOLOGY CONFERENCE, 1996. MOBILE TECHNOLOGY FOR THE HUMAN RACE., IEEE 46TH ATLANTA, GA, USA 28 APRIL-1 MAY 1996, NEW YORK, NY, USA,IEEE, US, 28 April 1996 (1996-04-28), pages 564-568, XP010162451 ISBN: 0-7803-3157-5**

- STEINER B ET AL: "LOW COST CHANNEL ESTIMATION IN THE UPLINK RECEIVER OF CDMA MOBILE RADIO SYSTEMS AUFWANDSGUESTIGE KANALSCHAETZUNG IN DER AUFWAERTSSTRECKE VON CDMA-MOBILFUNKSYSTEMEN" FREQUENZ, SCHIELE UND SCHON GMBH. BERLIN, DE, vol. 47, no. 11/12, 1 November 1993 (1993-11-01), pages 292-298, XP000426381 ISSN: 0016-1136

**Description**

**Field of the Technology**

The present invention relates generally to CDMA cellular mobile communication technology, and more particularly to a method for signal detection and processing in a CDMA spread spectrum cellular mobile communication system. The method is a combination of time diversity and joint detection.

**Background of the Invention**

In a CDMA spread spectrum cellular mobile communication system, especially a Time Division Duplex (TDD) code division multiple access mobile communication system, in order to overcome multipath and multiple access interference, in principle a base transceiver station (BTS) and a user equipment can all deploy time diversity method to raise system performance; and deploy joint detection algorithm as a basic signal detection method to suppress Multiple Access Interference (MAI) and InterSymbol Interference (ISI). Specifically, BTS side can deploy smart antenna technology. In this case, by using multiple antenna units, spatial diversity gain is obtained, and with corresponding beam synthesized algorithm receiving sensitivity is raised (it can be understood as decreasing interference and suppressing white noise at the same time). Nevertheless, at UE side in order to decreasing cost and size, usually only one antenna is used for receiving. In this case, as multiple antennas receiving technology cannot be used, i.e. same frequency interference and hot noise cannot be suppressed by spatial diversity, so uplink and downlink receiving gain is unmatched.

Especially in a CDMA spread spectrum cellular mobile communication system applying joint detection algorithm, as joint detection algorithm can estimate multipath and multiple access interference coming from all users in this cell, so at the BTS, the multipath and multiple access interference can be suppressed at a maximum degree. Nevertheless, at the UE, although multipath and multiple access interference coming from the cell user can be suppressed in a maximum degree by using joint detection algorithm, but for those users at the cell edge, joint detection algorithm cannot estimate and suppress the signal, which comes from neighbor cell with same frequency and adds to the system as a noise. This signal decreases system performance greatly, and noise coefficient of the receiver limits the receiving sensitivity. In this case, if there is no appropriate signal processing method, error rate of receiving signal will be greatly increased and the communication will be even interrupted.

Although, power control and smart antenna algorithm can suppress interference coming from neighbor cells in a maximum degree, but without appropriate method to raise UE receiving gain, communication quality will be seriously decreased and communication will be even interrupted. For the purpose of same frequency multiplexing in a CDMA spread spectrum cellular mobile communication system, the only way to do is to decrease the working channels activated at the same time to guarantee the UE communication quality in the cells overlap area. Nevertheless, this will decrease system capacity.

Several algorithms for the minimum mean squared error (MMSE) detection of block CDMA signals with spatial and temporal diversities was provided in an article, entitled "A novel fast joint detector for smart antenna based CDMA systems" by WEIDONG YANG et al, published in the IEEE Journal on Signals, System, and Computers, 1999.

An article entitled "Known and novel diversity approaches in a JD-CDMA system concept developed within COST 231" presented by KLEIN ANJA et al was published in the IEEE Journal on Personal, Indoor and Mobile Radio Communications, 1995. The authors investigated the gains achievable by different types of diversity in the JD-CDMA system concept, and showed that considerable gains can be achieved by different types of antenna diversity and by exploiting the additional diversity potential of CDMA.

ALKUSSAYER H M et al provided an article entitled "Time diversity decorrelator (TDD); a near-far resistant detector for asynchronous CDMA system" published in the IEEE Journal, 1996, which disclosed a near-far resistant detector for asynchronous CDMA systems operating in Additive White Gaussian Noise channels.

Above mentioned papers disclosed the use of time diversity in combination with joint detection.

**Summary of the Invention**

In order to solve the problem mentioned above, it is necessary to propose a baseband processing method without increasing calculation complexity.

The purpose of the invention is to provide a signal processing method in a CDMA spread spectrum cellular mobile communication system. The method will increase UE (receiver) diversity gain, and when used in a mobile terminal, the method will solve the uplink and downlink unmatched problem. The method will reach same frequency multiplexing purpose without increasing calculation amount greatly, and when it is used in a BTS, receiving gain is increased also.

According to a first aspect of the invention, there is provided a signal processing method as set out in Claim 1. Preferred features of this aspect are set out in Claim 2.

The invention method, combining time diversity and joint detection algorithm, applies an optimal algorithm, which uses diversity gain obtained on time domain, to raise signal noise ratio of receiving signal of user equipment.

A signal processing method of the invention is a method combining time diversity and joint detection. Without greatly increasing calculation complexity, user equipment in CDMA spread spectrum cellular mobile communication system can obtain diversity gain, so receiver sensitivity is raised, system capacity is increased and uplink and downlink performance unmatched problem is solved. Again, as taking time diversity, a relatively simple algorithm of joint detection can be used, so without increasing total calculation amount the method has stronger anti-interference performance comparing with only using joint detection algorithm. The method of the invention also can be used in BTS to raise receiving gain.

## Brief Description of the Drawings

Figure1 is a block diagram of the joint detection algorithm.

Figure2 is a burst data structure diagram in a TDD CDMA mobile communication system.

Figure3 is a block diagram of the invention method combining time diversity and joint detection.

## Embodiments of the Invention

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

The embodiment takes Time Division Synchronized CDMA (TD-SCDMA) system as an example. The TD-SCDMA system is proposed by CWTS and is one of the IMT-2000 Radio Transmission Technologies.

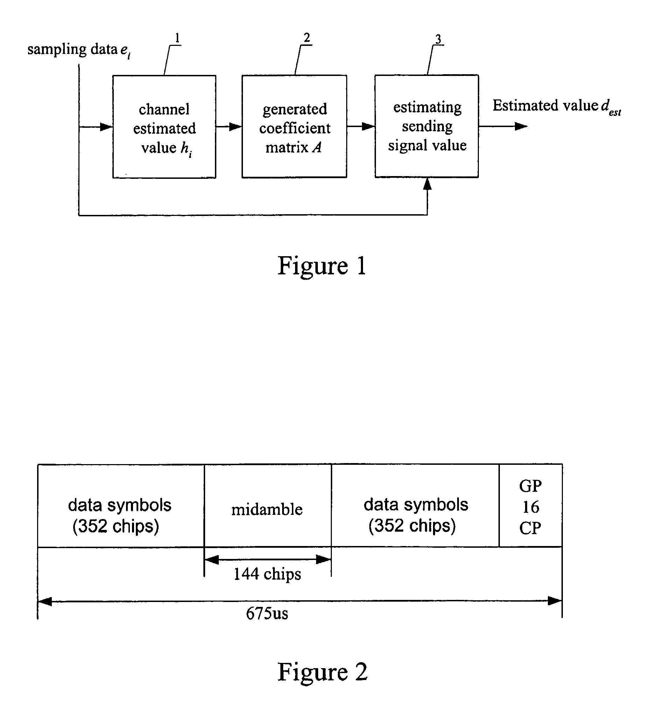

Figure 1 shows implementation steps of joint detection algorithm in a TD-SCDMA system. Suppose a sent original data is $d$, a system matrix $A$ represents spread spectrum, scrambling and spatial channel functions, $n$ represents same frequency interference between neighbor cells and hot noise, then data $e$ received by user equipment (receiver) can be expressed by the following formula (1):

$$e = Ad + n \qquad\qquad (1)$$

Step1 of Figure1 represents solving an impulse response estimated value $h_i$ from the received sample data $e_i$. In a TD-SCDMA system, burst data structure defines training sequence midamble for channel estimation is shown in Figure2. The training sequence midamble is located in a time slot width (usually, it is several hundreds microsecond, and it is 675 $\mu$s in the Figure). Before and after the training sequence Midamble (it is 144 chips length in the Figure), there are Data Symbols (the length is 352 chips in the Figure). When $m_i$ represents a training sequence midamble sent by a user $i$, $e_{mid}$ represents a training sequence midamble received, and $n_m$ represents noise interference at training sequence midamble, then there is the following formula:

$$e_{mid} = \sum_i \dot{m}_i \otimes h_i + n_m \qquad\qquad (2)$$

Wherein $\otimes$ symbol represents convolution.

The channel impulse response estimated value $h_i$ in UE receiving end can be solved by formula (3):

$$h_i = G^{-1} e_{mid} \qquad\qquad (3)$$

The $G$ matrix in formula (3) is a coefficient matrix generated by every user training sequence midamble.

In Figure 1, steps 1 and 2 represents procedure for obtaining impulse response estimated value $h_i$ at UE side and procedure for generating system matrix $A_i$ by the obtained $h_i$ and the UE user spread spectrum code, respectively. (The generating technology of system matrix $A_i$ is in another invention patent of the inventor.)

Purpose of joint detection is to estimate $d$ according to $e$ and $A$. Step3 in Figure1 is an implementation of joint detection, i.e. estimating sending signal. There are various algorithms to implement estimating $d_{est}$, includes:

$$d_{est} = (diag(A^{*T}A))^{-1} A^{*T} e \qquad (4)$$

or

$$d_{est} = (A^{*T}A)^{-1} A^{*T} e \qquad (5)$$

etc., wherein $*T$ represents conjugation transpose and *diag* is a diagonal matrix symbol.

Taking formula (5) as a specific algorithm example describes the combination method of time diversity and joint detection.

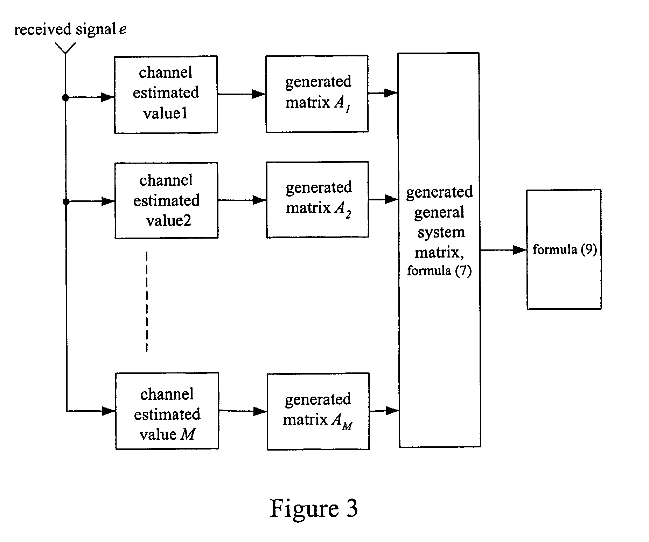

Refer to Figure3, the method of the invention, which combines time diversity and joint detection, comprises the following steps:

1) UE makes $i^{th}$ sample of received signal $e$ on time domain and obtains sampled data $e_i$;

2) make impulse response estimate of a spatial channel according to sampled data $e_i$ and obtain the spatial channel impulse response estimated value $h_i$;

3) obtain matrix $A_i$ from the obtained spatial channel impulse response estimated value $h_i$;

4) repeat steps 1), 2), 3) $M$ times in total, i.e. after $M$ times sampling of a received signal, the sampled data can be expressed by $e_i$, $i$ = 1, ..., $M$. In the received signal, the part corresponding to the training sequence midamble can be expressed as $e_{mid-i}$, $i$ = 1, ..., $M$. According to formula (3), after sampling the received signal with $M$ times, $M$ spatial channel impulse response estimated values $h_i$, $i$ = 1, ..., $M$ can be obtained. Then, according to the $M$ spatial channel impulse response estimated values $h_i$, $M$ matrixes $A_i$ can be obtained;

5) constitute a system matrix $A$ by the $M$ matrixes $A_i$;

6) perform joint detection algorithm based on the system matrix $A$ and obtain estimated value of the original sending data. If simply using formula (5) for calculation, $M$ estimated values of the original sending data $d_i$, $i$ = 1, ..., $M$ can be obtained. Then, process these $M$ estimated values $d_i$ with the following formula:

$$d_{sum} = \sum_{i=1}^{M} d_i = \sum_{i=1}^{M} (A_i^{*T} A_i)^{-1} A_i^{*T} e_i \qquad (6)$$

Making a decision according to the sign of $d_{sum}$, then an original sending data is recovered. With formula (6), diversity gain is raised, but at the same time, the operation amount is increased by $M$ times. In order to raise diversity gain and without increasing operation amount, the invention applies the following method:

Suppose:

$$A_{sum} = (A_1^T, A_2^T \cdots A_M^T)^T \qquad (7)$$

$$e_{sum} = (e_1^T, e_2^T \cdots e_M^T)^T \qquad (8)$$

Then, an estimated value of original sending data can be expressed as:

$$d_{est} = (\sum_{i=1}^{M} A_i^{*T} A_i)^{-1} A_{sum}^{*T} e_{sum} \qquad (9)$$

Comparing formulas (6) and (9), it is seen that formula (9) greatly decreases matrix inverse calculation, which has bigger operation amount. Therefore, the total operation amount of formula (9) is greater decreased comparing with formula (6).

When sampling times $M$ is larger, formula (4) combining time diversity and joint detection algorithm can be used, i.e.

$$d_{est} = (diag(\sum_{i=1}^{M} A_i^{*T} A_i))^{-1} A_{sum}^{*T} e_{sum} \qquad (10)$$

Operation amount of formula (10) is lower then formula (9). When $M$ takes an appropriate value, the operation amount of formula (10) is that near the operation amount of formula (5), but the performance of formula (10) is better than formula (5).

From the above analysis, it is seen that using the method, proposed by the invention, for combining time diversity and joint detection algorithm, the unmatched problem of uplink and downlink receiving gain can be solved and the UE receiving signal noise ratio can be raise without increasing operation amount. Consequently, in a CDMA spread spectrum cellular mobile communication system, same frequency multiplexing of neighbor cells is implemented without decreasing communication quality.

Although the embodiment of the invention is designed for a UE based on a TD-SCDMA system, but it can be directly used in other CDMA systems with TDD mode, such as UTRA TDD, another CDMA TDD system in IMT-2000. The invention also can be directly used in BTS of CDMA TDD system. After appropriate revision, the invention can be thoroughly used in UE and BTS of other CDMA mobile communication system applying joint detection algorithm.

**Claims**

1.  A signal processing method in a code division multiple access mobile communication system, comprising steps of:

   A. sampling a received signal in $M$ times on time domain, then getting $M$ sampled data $e_i$;
   B. estimating spatial channel impulse response for each sampled data $e_i$ obtained at each sampling, then getting $M$ spatial channel impulse response estimated values $h_i$;
   C. getting $M$ system matrixes $A_i$ from the obtained each spatial channel impulse response estimated value $h_i$ and the user spread spectrum code of the user equipment;
   D. performing joint detection algorithm according to the system matrix $A_i$, and getting original sending data estimated value $d_{est}$, $i = 1 ... M$ ;

   wherein the original sending data estimated value $d_{est}$ is estimated by using formulas:

$$d_{est} = (\sum_{i=1}^{M} A_i^{*T} A_i)^{-1} A_{sum}^{*T} e_{sum} ,$$

   or when $M$ being larger,

$$d_{est} = (diag(\sum_{i=1}^{M} A_i^{*T} A_i))^{-1} A_{sum}^{*T} e_{sum}$$

where $A_{sum} = (A_1^T, A_2^T \cdots A_M^T)^T$ , $e_{sum} = (e_1^T, e_2^T \cdots e_M^T)^T$ , *T represents conjugation transpose and *diag* is a diagonal matrix symbol.

2. A method according to Claim 1, wherein the spatial channel impulse response estimated value $h_i$ is got by first using formula $e_{mid} = \sum_i m_i \otimes h_i + n_m$ , then formula $h_i = G^{-1}e_{mid}$; wherein $\otimes$ symbol represents convolution, $e_{mid}$ is training sequence midamble received by user equipment, $G$ is coefficient matrix generated by the training sequence midamble of user equipment, $m_i$ is a training sequence midamble sent by the $i^{th}$ user equipment, and $n_m$ represents noise interference at training sequence midamble.

**Patentansprüche**

1. Signalverarbeitungsverfahren in einem Mobilfunk-Kommunikationssystem mit Codemultiplex-Mehrfachzugriff, mit den folgenden Schritten:

A. Abtasten eines empfangenen Signals zu M Zeitpunkten im Zeitbereich, dann Erlangen von M abgetasteten Datenelementen $e_i$;
B. Schätzen der Raumkanalimpulsantwort für jedes abgetastete Datenelement $e_i$, das bei jeder Abtastung erlangt wird, dann Erlangen von M Schätzwerten für die Raumkanalimpulsantwort $h_i$;
C. Erlangen von M Systemmatrizen $A_i$ aus jedem erlangten Schätzwert für die Raumkanalimpulsantwort $h_i$ und dem Teilnehmer-Spreizspektrumcode der Teilnehmereinrichtung;
D. Ausführen eines Mehrbenutzerdetektionsalgorithmus entsprechend der Systemmatrix $A_i$ und Erlangen eines Originalsendedaten-Schätzwerts $d_{est}$, wobei i=1 ...M;

wobei der Originalsendedaten-Schätzwert $d_{est}$ unter Verwendung der folgenden Formeln geschätzt wird:

$$d_{est} = (\sum_{i=1}^{M} A_i^{*T} A_i)^{-1} A_{sum}^{*T} e_{sum} ,$$

oder, wenn M größer ist:

$$d_{est} = (\text{diag}(\sum_{i=1}^{M} {}_i^{*T} A_i))^{-1} A_{sum}^{*T} e_{sum}$$

wobei $A_{sum} = (A_1^T, A_2^T ...A_M^T)^T$, $e_{sum} = (e_1^T, e_2^T ... e_M^T)^T$, *T für "konjugiert transponiert" steht und diag ein Diagonalmatrix-Symbol ist.

2. Verfahren nach Anspruch 1, wobei der Raumkanalimpulsantwort-Schätzwert $h_i$ erlangt wird, indem zuerst die Formel

$$e_{mid} = \sum_i m_i \otimes h_i + n_m,$$ und dann die Formel h; = $G^{-1}e_{mid}$ verwendet wird; wobei $\otimes$ die Faltung darstellt,

$e_{mid}$ die durch die Teilnehmereinrichtung empfangene Trainingssequenz-Mittambel ist, G die durch die Trainingssequenz-Mittambel der Teilnehmereinrichtung erzeugte Koeffizientenmatrix ist, $m_i$ eine durch die i-te Teilnehmereinrichtung gesendete Trainingssequenz-Mittambel ist und $n_m$ die Rauschstörung bei der Trainingssequenz-Mittambel darstellt.

**Revendications**

1. Procédé de traitement de signal dans un système de communication mobile à accès multiple par répartition de code, comprenant les étapes de:

   A. échantillonnage d'un signal reçu à M instants sur le domaine temporel puis obtention de M données échantillonnées $e_i$;
   B. estimation d'une réponse impulsionnelle de canal spatial pour chaque donnée échantillonnée $e_i$ obtenue à chaque échantillonnage puis obtention de M valeurs estimées de réponse impulsionnelle de canal spatial $h_i$;
   C. obtention de M matrices système $A_i$ à partir de chaque valeur estimée de réponse impulsionnelle de canal spatial obtenue $h_i$ et du code de spectre d'étalement d'utilisateur de l'équipement d'utilisateur;
   D. réalisation d'un algorithme de détection de jonction conformément à la matrice système $A_i$ et obtention d'une valeur estimée de données d'envoi originales $d_{est}$, i = 1... M,

   dans lequel la valeur estimée de données d'envoi originales $d_{est}$ est estimée en utilisant les formules:

   $$d_{est} = (\sum_{i=1}^{M} A_i^{*T} A_i)^{-1} A_{sum}^{*T} e_{sum} \, ,$$

   ou lorsque M est plus grand,

   $$d_{est} = (\text{diag}(\sum_{i=1}^{M} {}_i^{*T} A_i))^{-1} A_{sum}^{*T} e_{sum}$$

   où $A_{sum} = (A_1^T, A_2^T \dots A_M^T)^T$, $e_{sum} = (e_1^T, e_2^T \dots e_M^T)^T$, *T représente une transposée de conjugaison et diag est un symbole de matrice diagonale.

2. Procédé selon la revendication 1, dans lequel la valeur estimée de réponse impulsionnelle de canal spatial $h_i$ est obtenue en utilisant tout d'abord la formule $$e_{mid} = \sum_i m_i \otimes \bar{h}_i + n_m,$$ puis la formule $h_i = G^{-1} e_{mid}$; dans lequel le symbole $\otimes$ représente une convolution, $e_{mid}$ est un midambule de séquence d'apprentissage reçu par un équipement d'utilisateur, G est une matrice de coefficients générée par le midambule de séquence d'apprentissage d'équipement d'utilisateur, $m_i$ est un midambule de séquence d'apprentissage envoyé par le i-ième équipement d'utilisateur et $n_m$ représente une interférence de bruit au niveau du midambule de séquence d'apprentissage.

sampling data $e_i$

channel estimated value $h_i$  →  generated coefficient matrix $A$  →  estimating sending signal value  →  Estimated value $d_{est}$

Figure 1

| data symbols (352 chips) | midamble | data symbols (352 chips) | GP 16 CP |
|---|---|---|---|

144 chips

675us

Figure 2

received signal $e$

```
                  ┌──────────┐      ┌──────────┐
                  │ channel  │      │generated │
         ●───────▶│estimated │─────▶│matrix A₁ │────▶
         │        │ value1   │      │          │
         │        └──────────┘      └──────────┘
         │        ┌──────────┐      ┌──────────┐           ┌──────────┐
         │        │ channel  │      │generated │           │generated │
         ●───────▶│estimated │─────▶│matrix A₂ │────▶      │ general  │          ┌──────────┐
         │        │ value2   │      │          │           │ system   │─────────▶│formula(9)│
         │        └──────────┘      └──────────┘           │ matrix,  │          └──────────┘
         │             ┊                                   │formula(7)│
         │             ┊                                   │          │
         │        ┌──────────┐      ┌──────────┐           │          │
         │        │ channel  │      │generated │           │          │
         └───────▶│estimated │─────▶│matrix A_M│────▶      └──────────┘
                  │ value M  │      │          │
                  └──────────┘      └──────────┘
```

# Figure 3